# EUROPEAN PATENT APPLICATION

(11) **EP 3 138 638 A1**
(43) Date of publication of application: **08.03.2017**
(21) Application number: 14892981.3
(22) Date of filing: 28.04.2014
(51) Int. Cl.: B09C 1/02, C11D 1/66, C11D 3/16

(54) **MODIFIED TERPENE FORMULATION FOR REMOVING PETROLEUM OILS FROM CONTAMINATED SOILS, MODIFIED TERPENE-BASED CONCENTRATED OIL-IN-WATER EMULSION AND USE OF A MODIFIED TERPENE-BASED FORMULATION FOR CLEANING CONTAMINATED SOILS**

(71) Applicant: Odc Ambievo Tecnologia E Inovação Ambiental, Indústria e Comercio de Insumos Naturais S/A, CEP:13211-840 Jundiai, SP (BR)
(72) Inventor: LOUREIRO PECORARO, Fernando, 05716-150 São Paulo - SP (BR)
(74) Representative: Fletcher, Matthew James Edwin
(86) International application number: PCT/BR2014/000135
(87) International publication number: WO 2015/179928

(57) **Abstract**

This patent application relates to a modified terpene-based formulation for removing petroleum-derived oil from contaminated soil, belonging in the chemical products field. A modified terpene-based oil-in-water emulsion containing an anionic surfactant and a carrier, as well as the use of the formulation of modified terpenes for the cleanup of contaminated soil are disclosed.

## Description

### INTRODUCTION

The claimed invention relates to a modified terpene-based formulation for removing petroleum-derived oil from contaminated soil, belonging in the chemical products field, which was developed to clean up hard surfaces such as floors or porous surfaces such as soil and the like.

The formulation of the present invention does not harm the environment and allows for an effective and safe soil recovery.

### PRIOR ART

Many activities result in the contamination of surfaces due to the characteristics of the activities themselves or accidents. Depending on the characteristics of an industrial process, the objects produced by the said process and/or the equipment used therein and/or the place where the said process is carried out may generate contaminants throughout the steps of the process that need to be removed for the other steps to be followed.

There are various formulations containing terpenes that can be used for removing contaminants resulting from an industrial process.

Patent application PI 9800249-0 relates to an emulsion intended for use in the electronic components industry to remove welding paste, clean printed circuit boards and for other uses in different areas of industry. The aforementioned patent application discloses that in such applications solvent compositions containing halogenated hydrocarbons were utilized, which caused problems related to toxicology and biodegradability. To solve that, a cleaning composition containing terpenes and other ingredients is utilized not only for cleaning but to provide the formulation with a high flash point in order to reduce the risk of inflammability.

Patent application WO92/09378 discloses a mixture of terpenes and pure dibasic esters, mixed with surfactants to clean up welding flux contaminants.

PI0209201-8 discloses the use of pure solvents or mixtures containing solvents for the cleanup of textiles.

PI9204505-7 makes use of an alkyl ether sulfate surfactant emulsion with a terpene-derived solvent for thickening a cleaning solution in order to render it more stable and durable or enhance its performance.

PI9203973-1 discloses an emulsion containing terpene alcohols and surfactants aiming at solving the inflammability issue in cleaning solutions in general; it also discloses that the problems relative to providing an effective and safe cleaning solution has not been addressed by employing terpene-based cleaning compositions.

PI9107211-5 expatiates upon utilizing an emulsion of terpenes and surfactants with water for polishing or finishing metal surfaces, evincing their improved features even in terms of painting.

PI9306520-5, like the previous document, relates to metal articles and aims at solving the problem relative to safety during the handling of acid or alkaline solutions utilized in the cleanup of metal articles with a terpene emulsion which boon is less equipment wear thereby extending its life.

As we can see, the abovementioned prior-art patent applications disclose just about the same subject, i.e., terpenes combined with other ingredients that have specific functions depending upon the object to be treated; however, little is said about compounds for treating soil in a quick and practical fashion because, as porous as it is, soil is difficult to clean since homogenization has to be flawlessly performed in order to prevent contamination in the agglomerate formed.

There are other activities that lead to contamination caused by petroleum derivatives besides those caused by industrial processes, like, e.g., the ones produced by transport systems (railroads, for example), work sites etc. that must be eliminated.

Other types of contamination to get rid of are the ones resulting from accidents in general. For instance, there may be incidental soil damage caused by oil industries due to petroleum derivatives leak like BTEXs (benzene, toluene, ethylbenzene and xylene), PAHs (polycyclic aromatic hydrocarbons), MTBE (methyl tert-butyl ether) or CHCs (chlorinated hydrocarbons). Such accidents usually cause damage to soil, fauna, flora, aquifers etc. Thus, various measures have been taken, from awareness campaigns to procedures and specific regulations aiming at reducing the risk of such accidents.

Hence, there are many technologies available to prevent soil contamination by petroleum derivatives, the most common of them being soil washing, which involves the use of cleaning products like organic solvents, for example.

It happens that the products utilized in the usual processes for the cleanup of contaminated soil are aggressive and they too require care not to affect the environment and/or endanger the ones responsible for carrying out the cleanup process.

WO95/11766 discloses a biological process of treating soil in which the use of pure D-limonene improves the effect of the cleaning solution employed, which in that case consists of microorganisms admixed with mineral-rich water.

US 5,213,624 relates to a terpene-based cleaning microemulsion composition which may be used for soil cleanup (but not only for such purpose), and its formulation comprises a terpene-based solvent such as D-limonene, an aliphatic glycol monoether co-solvent, a mixture of nonionic surfactants and fatty acid alkanolamide and water. As we can see, the said document discloses a mixture that is different from that of the claimed invention since it employs non-modified terpenes which are less effective in removing contaminants.

Despite the solutions already known in the art - like the aforementioned examples -, there is a need for the optimization of cleanup systems for various applications, more particularly in developing countries, including Brazil, where remote regions witnessing a development boom - and therefore still lacking some of the resources required to prevent accidents involving chemical products, such as oil leak, for example - often need practical, efficient and low-cost solutions to deal with the said issues.

For such a reason, the claimed invention is a formulation effective in cleaning up soil or hard surfaces that have been contaminated with petroleum-derived products. The modified terpenes utilized in the claimed formulation provide - besides its cleaning function - a high flash point for the reduction of the risk of inflammability, thereby ensuring greater safety during decontamination.

### OBJECTIVES OF THE INVENTION

The invention described herein consists of a formulation comprised of modified terpenes and terpenoids for promoting the decontamination of soil contaminated with petroleum-derived oil.

The said formulation consists of a solvent fraction of terpenes and terpenoids comprising D-limonene, D-carveol, 1-carveol carvone, limonene oxide, limonene epoxide, phellandrene, terpendiol, teroineol, di-hydroxy-carvone etc., preferably obtained by oxidizing D-limonene, and allows for the removal of petroleum-derived contaminants in contaminated soil.

The formulation of the invention utilizes conveniently mobilized resources to deliver an effective and safe cleanup to the qualified users.

Another objective of the invention consists in producing a concentrated emulsion comprising a mixture of modified terpenoids, anionic surfactants and a carrier.

The third objective of the invention consists in providing a formulation arising from the oxidation of D-limonene which allows for the effective treatment of residues without resulting in environmental damage.

The fourth objective consists in using the formulation of modified terpenes for making a product intended for soil decontamination.

### DETAILED DESCRIPTION OF THE INVENTION

In view of the aspects and objectives mentioned above and aiming at achieving them, the present invention was developed, which is intended for the removal of petroleum-derived oil from the soil, essentially formed by mixtures of terpenes and/or terpenoids obtained in accordance with the process described in PI 0903082-4, by the same applicant. The said mixtures are combined with an emulsifier in such a way that - when in the presence of petroleum derivatives like, but not limited to, BTEXs (benzene, toluene, ethylbenzene and xylene), PAHs (polycyclic aromatic hydrocarbons), MTBE (methyl tert-butyl ether) or CHCs (chlorinated hydrocarbons) impregnated in soil, the aforementioned formulation removes the said derivative from the soil, thereby forming an emulsion that facilitates removal and further separation of the formulation from the petroleum derivative for reuse of both of them.

As we will notice below, the present modified terpene-based formulation is stronger than the primary bases that form it, thereby providing an optimized cleaning effect, which is the main goal of the invention.

Since the formulation is based on modified terpene and/or terpenoid, it does not cause undesired damage to the environment, unlike other soil cleanup products.

The present formulation provides safe handling to those about to carry out the cleanup process.

In addition, the said formulation is produced from widely available resources and products, conveniently mobilized.

### LIST OF FIGURES

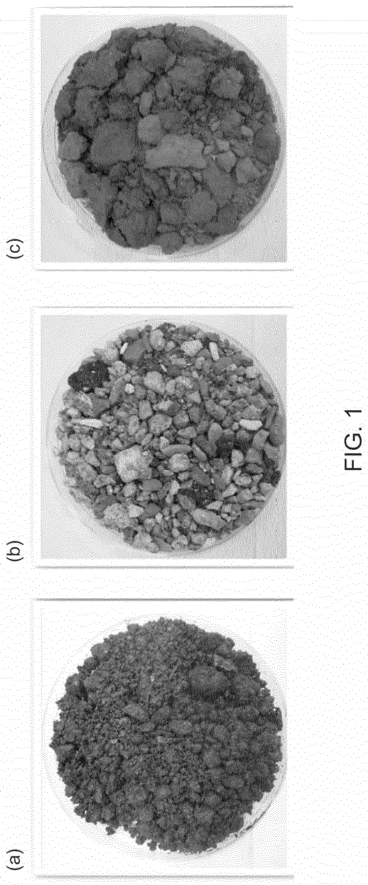

Figure 1 - it displays the process of separating a petroleum-derived oil from the soil, and both the thick and thin cuts of soil can be decontaminated: (a) shows soil contaminated with 15% of heavy oil containing 7,253 mg of Total Petroleum Hydrocarbon (TPH) per Kg of soil and 20,000 mg of Oil and Grease (O&G) per Kg of soil; (b) shows thick cut after washing containing 304 mg of TPH per Kg of soil and 250 mg of O&G per Kg of soil; and (c) shows thin cut of soil after washing containing 506 mg of TPH per Kg of soil.

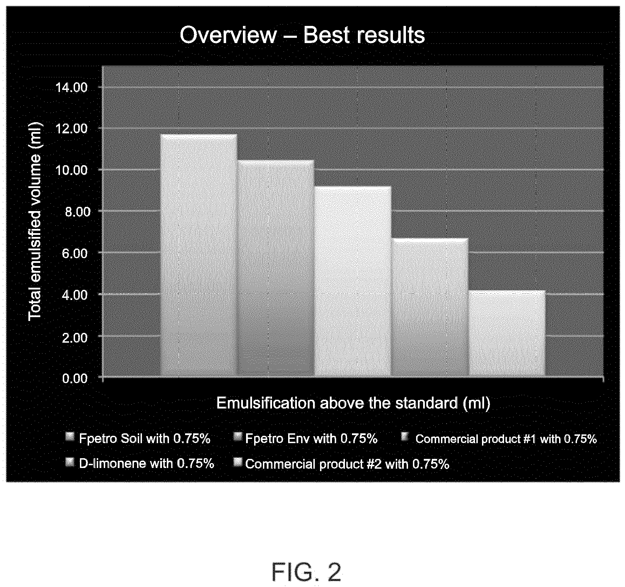

Figure 2 - Chart comparing the emulsification capability of the following developed fractions: FPetro Soil and FPetro Env, with pure D-limonene and commercial products #1 and #2 for cleaning petroleum derivatives, all of them exhibiting 0.75% (m/m) of dilution concentrations, wherein the FPetro Env fraction of modified terpenes comprises 0.5% of oxidized terpenes produced according to the method disclosed by PI 0903082-4; the FPetro Soil fraction of modified terpenes comprises 0.1% of oxidized terpenes produced according to the method disclosed by PI 0903082-4; commercial product #1 contains an amount of oxidized ingredients with a large apolar fraction obtained through a catalyst's modified process; and commercial product #2 consists of a product having a 10% concentration of modified terpenes.

### DETAILED DESCRIPTION OF THE INVENTION

The present invention consists of a modified terpene-based formulation for removing petroleum-derived oil from soil.

The claimed formulation consists of a mixture of terpenes and/or terpenoids produced by oxidizing D-limonene as recited in PI 0903082-4 by the same applicant.

We could notice that a certain solvent fraction of the mixture of terpenes and/or terpenoids obtained in accordance with the process disclosed by patent application PI 0903082-4 when in specific amounts is able to remove petroleum-derived oil from soil in a safe, simple and effective manner.

The process described in patent application PI 0903082-4 comprises essentially preparing mixtures of terpene and/or terpenoid derivatives by oxidizing D-limonene in the presence of an acid catalyst, at concentrations ranging between 0.1 % and 10% of the mass of the reacting raw material, in a gas-liquid system, by making air flow at a rate ranging between 2 L/min and 8 L/min, per kg of raw material, under stirring and heating conditions, at temperatures ranging from 25 °C to 180 °C; and by washing the product of the reaction with water or alkaline solution, to reach a neutral pH and by vacuum drying the washed neutral product.

The resulting composition is a mixture of terpenes and/or terpenoids comprising: D-limonene, D-carveol, 1-carveol carvone, limonene oxide, limonene epoxide, phellandrene, terpendiol, terpineol, dihydroxy-carvone etc. The mixture of terpenes and/or terpenoids obtained according to the process described by PI 0903082-4 may also comprise D-limonene, their isomers and/or their oxygenated derivatives.

Of the mixture of terpenes and/or terpenoids produced by oxidizing D-limonene, we noticed that a certain solvent fraction promotes decontamination of soil contaminated with petroleum derivatives, thus providing an optimized cleaning effect.
Therefore, one of the objectives of the invention consists in providing a formulation of modified terpenes that can be applied to any type of soil contaminated with petroleum derivatives.

The types of contaminated soil to be decontaminated by the formulation in question include - but are not limited to - those contaminated by petroleum derivatives as the result of various activities. Petroleum derivatives relate to BTEXs (benzene, toluene, ethylbenzene and xylene), PAHs (polycyclic aromatic hydrocarbons), MTBE (methyl tert-butyl ether) or CHCs (chlorinated hydrocarbons) impregnated in the soil.

The present formulation can also be used for decontaminating various surfaces involving leak or contamination by petroleum derivatives.

The present formulation removes the petroleum derivative from soil and forms an emulsion which facilitates the removal and further separation of the formulation from the petroleum derivative for reuse of both.

Modified terpenes are the selection of a certain solvent fraction from a mixture of terpenes and/or terpenoids obtained by oxidizing D-limonene as reported by patent application PI 0903082-4. Particularly, modified terpenes consist of specific amounts of D-limonene, cis- and trans-carveol, carvone, limonene oxide and alpha-terpineol.

More specifically, the modified terpene-based formulation of the present invention consists of the following solvent fraction:
- from 90 to 98% by weight of D-limonene
- between 0.1 and 2% by weight of isomeric forms of carveol, consisting of cis-carveol, trans-carveol or mixtures thereof
- between 0.01 and 1 % by weight of carvone
- between 0.01 and 1 % by weight of limonene
- between 0.01 and 2% by weight of alpha-terpineol

Preferably, the formulation of the present invention may comprise between 94 and 98% D-limonene, a mixture of 0.1 to 0.4 of cis- and trans-carveol, from 0.05 to 0.25% carvone, from 0.05 to 0.2% D-limonene oxide and from 0.15 to 0.4% alpha-terpineol.
The aforementioned formulation may contain impurities at concentrations below 0.05%.

The formulation for removing petroleum-derived oil must be preferably utilized by qualified professionals and can be applied according to many techniques of interest, such as, but not limited to: Hydraulic containment; Pump-and-treat; Multi-phase extraction; Chemical oxidation; Soil vapor extraction; Air sparging; Air stripping; Biopiles; Bioremediation; Soil flushing; Bioventing; Natural attenuation; Biosparging; Thermal desorption and Phytoremediation.

In an embodiment of the invention, the formulation of modified terpenes can be associated with surfactants and other carriers, forming an oil-in-water emulsion.

The surfactants that can be combined with the formulation of modified terpenes of the present invention include food grade nonionic surfactants having from 1 to 20 carbon atoms in the chain.
The carrier to be used in combination with the formulation of modified terpenes of the present invention preferably comprises water.

The concentrated oil-in-water emulsion - that comprises the formulation of modified terpenes, surfactant and carrier - consists of a biodegradable product for cleaning contaminated soil and has the following composition:
- between 0.5% and 70% by weight of a formulation of modified terpenes;
- between 0.1% and 50% by weight of at least one nonionic surfactant; and
- between 0.1 % and 99.4% of a carrier.

In another embodiment of the present invention, 5-10% water-soluble ethanol can be added to facilitate the emulsion's flowdability when it appears viscous.

In a preferred embodiment of the concentrated oil-in-water emulsion a mixture of 4-32% of a mixture of modified terpenes, 5-20% by weight of at least one nonionic surfactant and 48-91 % by weight of a carrier is produced.

The nonionic surfactant consists of food grade nonionic surfactants having from 1 to 20 carbon atoms in the chain, preferably selected from: ethoxylated alcohols, polyethylene or polyol esters, alkyl polyglucosides, ethoxylated polyol esters and polysorbates or mixtures thereof, but not limited thereto.

Out of the carriers that can be used in the emulsion, water is preferably utilized.

The present formulation of modified terpenes is stable and capable of emulsifying contaminating oil. Separation or decontamination occurs when the oil-in-water emulsion of the present invention and the contaminated oil are emulsified, thereby allowing for the recycling of the solvents and the contaminating oil. Decontamination is displayed by Figure 1, where we can see that the formulation can remove even the contaminants from the thin cut of the soil, which poses an enormous challenge to the prior art due to its great adsorption capability.

Hence, the emulsions of the present invention produced by incorporating the formulation of modified terpenes can remove oil from contaminated soil without interfering in or producing effects on soil microorganisms and therefore do not leave residues in the soil for they are biodegradable.

### EXAMPLES OF APPLICATION TESTS AND THEIR RESULTS

### Example 1 - Test on the emulsification capability of the formulation of modified terpenes of the present invention in comparison with that of regular terpenes.

The emulsification capability of five samples were tested and compared: pure commercial D-Limonene, the fraction of modified terpenes FPetro Env, the fraction of modified terpenes FPetro Soil, commercial product #1 and commercial product #2.

The pure commercial D-limonene sample comprises between 95% and 97% of D-limonene.

The fraction of modified terpenes FPetro Env of the present invention comprises 0.5% of oxidized terpenes produced according to the method described in patent PI 0903082-4.

The fraction of modified terpenes FPetro Soil of the present invention comprises 0.1% of oxidized terpenes produced according to the method described in patent PI 0903082-4.

Commercial product #1 consists of a product which amount of oxidized terpenes is unknown, having a large apolar fraction obtained from a catalyst's modified process.

Commercial product #2 consists of a product having a concentration of 10% modified terpenes.

Each of the samples above was added with polysorbate 80 in a ratio of 3:1 of terpenes to surfactant and then the samples were diluted in water in a ratio of 1:100, so as to remain with 0.75% terpenes in the final solution.

The test consisted in putting 20 mL of the solutions to be tested in a graduated cylinder and adding 5 mL of thinner (a petroleum derivative) thereto with a pipette, then sealing the graduated cylinder and turning it upside down and back to the initial position three times at intervals of 2 to 4 seconds for each move. It must then be noticed if phase separation occurred, which is evinced by the formation of bubbles and immediate separation of the solution; if not, more 5 mL of thinner are added to the solutions and then over and over again till phase separation is achieved.

All tests were carried out three times, and the average of the results thereof was utilized as final values in the analysis.

The values obtained were compared to an existing standard intended to compare the tested samples identified as compound S-600, comprising 10% of terpenes with 0.2% of oxidized terpenes, 13.4% of polysorbate 80 and 76.6% of water, and the best results are displayed in the table below.

**Table 1 - Best emulsification test results.**

| | Emulsification above the standard (ml) |
|---|---|
| FPetro Soil with 0.75% | 11.67 |
| FPetro Env with 0.75% | 10.42 |
| Comm. Prod. #1 with 0.75% | 9.17 |
| D-Limonene with 0.75% | 6.67 |
| Comm. Prod. #2 with 0.75% | 4.17 |

As it can be seen in table 1 above, formulation FPetro Soil of modified terpenes of the present invention has a cleaning content 30% superior to that of the commercial product exhibiting the best result, and 75% superior to the result of the conventional D-Limonene terpene.

Figure 2 displays the result shown above in another way for better understanding thereof.

### Example 2 - Phase separation kinetics Test

For the Phase separation kinetics Test the same samples of the previous example were considered: pure commercial D-Limonene, the fraction of modified terpenes FPetro Env, the fraction of modified terpenes FPetro Soil, commercial product #1 and commercial product #2 at the same concentration of 0.75% terpenes.

The test consisted in adding 12.5 mL of a solution of thinner (a petroleum derivative), in a graduated cylinder, to 10 mL of the solutions intended for testing. After vigorous stirring, separation time was measured and recorded every time 1 mL of thinner was separated till the separation limit was reached.

**Table 2 - Separation kinetics test results**

| | Time to emulsify (in seconds): | | |
|---|---|---|---|
| | 4 mL | 5 mL | 6 mL |
| D-Limonene 0.75% | 48.00 | 58.00 | 68.00 |
| FPetro Soil | 42.00 | 47.00 | 53.00 |
| FPetro Env | 43.00 | 50.00 | 57.00 |
| Comm. Prod. #1 | 44.00 | 50.33 | 57.33 |
| Comm. Prod. #2 | 33.00 | 36.00 | 39.00 |

The best results were obtained from the FPetro Soil and Commercial product #2 samples with 0.75%, in which 6 mL were separated in 53.0 seconds and 39.0 seconds, respectively.

### Analysis on the "Emulsion vs Time" results:

Although Commercial product #2 has exhibited the best result in the Separation kinetics test, it should be noted that it yielded the worst result in the emulsification capability test.

By considering the features of the FPetro Soil sample in both tests, we have a product exhibiting the best emulsification capability and good kinetics, i.e., the most suitable product for the treatment of soil contaminated with hydrocarbon.

At the same time, by comparing the results of the formulations with the said standard we could see that the said results do not follow a linear logic, and the increase in efficiency is not necessarily related to the increase in the concentration of terpenes, but rather to the ranges tested and established in this invention.

As the preferred examples of embodiments were herein described, it must be understood that the scope of the present invention encompasses other possible variations, being limited only by the content of the appended claims, including the possible equivalents.

## Claims

1. Formulation of modified terpenes for removing petroleum-derived oil from contaminated soil, **characterized by** comprising the following ingredients:
• Between 90 and 98% by weight of D-limonene;
• Between 0.1 and 2% by weight of isomeric forms of carveol, consisting of cis-carveol, trans-carveol or mixtures thereof;
• Between 0.01 and 1 % by weight of carvone;
• Between 0.01 and 1 % by weight of limonene oxide and
• Between 0.01 and 2% by weight of alpha-terpineol.

2. The formulation according to claim 1, **characterized by** the fact that D-limonene is present in the range of 94-98% of the total weight of the formulation.

3. The formulation according to claim 1, **characterized by** the fact that carveol in the cis or trans forms or mixtures thereof is present in the range of 0.1-0.4% of the total weight of the formulation.

4. The formulation according to claim 1, **characterized by** the fact that carvone is present in the range of 0.05-0.25% of the total weight of the formulation.

5. The formulation according to claim 1, **characterized by** the fact that limonene oxide is present in the range of 0.05-0.2% of the total weight of the formulation.

6. The formulation according to claim 1, **characterized by** the fact that alpha-terpineol is present in the range of 0.15-0.4% of the total weight of the formulation.

7. A concentrated modified terpene-based oil-in-water emulsion, **characterized by** comprising the formulation of modified terpenes according to claims 1 to 6, at least one nonionic surfactant and a carrier.

8. The concentrated oil-in-water emulsion according to claim 7, **characterized by** consisting of:
• between 0.5% and 70% by weight of a formulation of modified terpenes, said formulation comprising between 90 and 98% by weight of D-limonene; between 0.1 and 2% by weight of isomeric forms of carveol, consisting of cis-carveol, trans-carveol or mixtures thereof; between 0.01 and 1 % by weight of carvone; between 0.01 and 1 % by weight of limonene oxide and between 0.01 and 2% by weight of alpha-terpineol.
• between 0.1% and 50% by weight of at least one food grade nonionic surfactant; and
• between 0.1 % and 99.4% of a carrier.

9. The concentrated oil-in-water emulsion according to claim 8, **characterized by** preferably consisting of:
• between 4% and 32% by weight of a formulation of modified terpenes, the said formulation comprising between 90 and 98% by weight of D-limonene; between 0.1 and 2% by weight of isomeric forms of carveol, consisting of cis-carveol, trans-carveol or mixtures thereof; between 0.01 and 1% by weight of carvone; between 0.01 and 1% by weight of limonene oxide and between 0.01 and 2% by weight of alpha-terpineol;
• between 5% and 20% by weight of at least one food grade nonionic surfactant; and
• between 48% and 91 % of a carrier.

10. The concentrated emulsion according to claims 8 and 9, **characterized by** further comprising 5-10% ethanol.

11. The concentrated oil-in-water emulsion according to claims 8 and 9, **characterized by** the fact the food grade nonionic surfactant comprises between 1 and 20 carbon atoms selected from ethoxylated alcohols, polyethylene or polyol esters, alkyl polyglucosides, ethoxylated polyol esters, polysorbates or mixtures thereof.

12. The concentrated oil-in-water emulsion according to claims 8 and 9, **characterized by** the fact the carrier is water.

13. Use of a formulation of modified terpenes according to claims 1 to 7, **characterized by** being intended for the preparation of a product for the cleanup of contaminated soil by petroleum derivatives.

14. The use according to claim 13, **characterized by** the fact the active component of various soil cleanup methods is selected from hydraulic containment; Pump-and-treat; multi-phase extraction; chemical oxidation; soil vapor extraction; Air sparging; Air stripping; Biopiles; Bioremediation; Soil flushing; Bioventing; natural attenuation; Biosparging; thermal desorption and phytoremediation.

15. Invention **characterized by** any of its embodiments or claim categories encompassed by the matter as originally disclosed by the patent application or the examples thereof herein represented.
